# EUROPÄISCHE PATENTSCHRIFT

(11) **EP 2 825 583 B1**
(45) Veröffentlichungstag und Bekanntmachung des Hinweises auf die Patenterteilung: **14.09.2016**
(21) Anmeldenummer: 13717423.1
(22) Anmeldetag: 15.03.2013
(51) Int. Cl.: C08J 3/12

(54) **VERFAHREN ZUR GRANULIERUNG VON TEILCHENHALTIGEM MATERIAL AUS INDUSTRIELLEN PROZESSEN, DAS SO HERGESTELLTE GRANULAT**
METHOD FOR GRANULATING PARTICLE-CONTAINING MATERIAL OBTAINED FROM INDUSTRIAL PROCESSES, THE GRANULATE THUS PRODUCED
PROCÉDÉ DE GRANULATION D'UN MATÉRIAU PARTICULAIRE PROVENANT DE PROCESSUS INDUSTRIELS, GRANULÉ AINSI FABRIQUÉ

(30) Priorität: 15.03.2012 DE 102012102178
(43) Veröffentlichungstag der Anmeldung: 21.01.2015
(73) Patentinhaber: Huntsman P&A Uerdingen GmbH, 47829 Krefeld (DE)
(72) Erfinder: AUER, Gerhard, 47800 Krefeld (DE); GÜNNEL, Horst, 47906 Kempen (DE); OFFERMANN, Martin, 47447 Moers (DE); WINKLER, Jochen, 47647 Kerken (DE)
(74) Vertreter: Viering, Jentschura & Partner mbB Patent- und Rechtsanwälte
(86) Internationale Anmeldenummer: PCT/DE2013/100104
(87) Internationale Veröffentlichungsnummer: WO 2013/135239

(56) Entgegenhaltungen:
- EP-A2- 2 208 767
- WO-A1-03/051963
- WO-A1-2007/104676
- DE-A1-102010 019 375

## Beschreibung

Die vorliegende Erfindung betrifft ein Verfahren zur Granulierung von teilchenhaltigem Material aus industriellen Prozessen. Genauer ist Gegenstand der Erfindung ein Verfahren zur Granulierung von teilchenhaltigem Material als industriellem Verfahrenserzeugnis oder Verfahrensrückstand wie Suspensionen, Schlämmen, Filterkuchen, Pasten und feuchten Feststoffen, wobei diese Materialien mit Feuchtigkeit absorbierenden organischen Polymermaterialien, bevorzugt Superabsorbern und/oder Hydrogelen, vermischt werden. Eine Ausführung des erfindungsgemäßen Verfahrens ist weiterhin ein Verfahren zur Granulierung von Pulvern oder Stäuben aus industriellen Verfahren, indem diese mit diesen Feuchtigkeit absorbierenden organischen Polymermaterialien, bevorzugt Superabsorbern und/oder Hydrogelen sowie Wasser oder wasserhaltigen Stoffen gemischt werden. Die so erhaltenen Granulate können weiter in einem Verfahren zur Trocknung der erhaltenen Granulate durch Kontakt mit einem gasförmigen Medium oder durch Zuführung thermischer Energie behandelt werden. Gegenstand der Erfindung sind weiterhin Granulate, die nach den beschriebenen Verfahren erhältlich sind, und deren Verwendung.

Feuchte Materialien wie beispielsweise Suspensionen, Schlämme, Filterkuchen, Pasten und feuchte Feststoffe wie auch kristallwasserhaltige Salze sind mitunter schwierig zu handhaben. Dabei sind die schlechten Lager- und Transporteigenschaften von feuchten Materialien ein besonderes Problem. Insbesondere bei sehr feinteiligen Materialien gelingt eine Entfeuchtung häufig nur unter Schwierigkeiten. Aufgrund der Feuchte und dem teilweise thixotropen Verhalten derartiger Materialien bilden sich häufig Anbackungen oder Verklebungen bei Transport, Lagerung oder Verarbeitung.

Dokument DE 10 2010 019375 offenbart ein Verfahren zur Granulierung von teilchenhaltigem Material aus industriellen Prozessen, bei dem das teilchenhaltige Material in Gegenwart von Wasser mit einem Material, das aus wasserlöslichen organischen Polymermaterial besteht, vermischt wird.

Dokument WO 2007/104676 offenbart ein Material, das ein Wasser absorbierendes, wasserunlösliches und quellfähiges organisches Polymermaterial enthält.

Bei starker mechanischer Einwirkung, wie z.B. bei einer Mahltrocknung, treten darüber hinaus häufig Probleme mit Abrasion auf. Daneben gibt es häufig Probleme mit Staubbildung im Zuge der Trocknung.

Die im Stand der Technik bekannten Probleme beim Handling von feuchten Materialien sind:
- Unzureichende Reduzierung der Feuchtigkeit: Eine mechanische Entwässerung führt zu feuchten Materialien, welche häufig nur 20 bis 50 Gew.-% an Trockenstoffanteil aufweisen.
- Die feuchten Materialien sind nicht einfach zu handhaben, insbesondere nachteilig ist die Neigung zu Anbackungen und Verklebungen bei Lagerung und Transport als auch die Neigung zur Thixotropie.
- Bei größeren Partikeln, z.B. Fragmenten eines Filterkuchens einer Filterpresse, tritt häufig ein Feuchtegradient innerhalb der Partikel auf: Innen sind die Partikel noch feucht, außen staubig.
- Bei den herkömmlichen Trocknungsverfahren ist insbesondere die Entstaubung der bei der Trocknung anfallenden Gasströme ist aufwändig.
- Häufig kommt es beim Transport oder bei der Trocknung zu einer erhöhten Abrasion.

Die Probleme beim Handling von pulver- oder staubförmigen Materialien sind allgemein bekannt und im Wesentlichen eine unerwünschte Staubbildung in offenen Systemen und schlechte Förder- und Dosiereigenschaften beim Transport.

Es besteht daher ein Bedarf an verbesserten Verfahren, um staub- oder pulverförmige, insbesondere aber auch feuchte Materialien in ihren Handlingeigenschaften zu verbessern. Die Aufgabe der Erfindung bestand somit darin, ein solches Verfahren und die nach dem Verfahren erhältlichen Materialien bereitzustellen.

Seitens des Erfinders wurde nun gefunden, dass die Aufgabe der Erfindung dadurch gelöst werden kann, dass ein Verfahren gefunden werden konnte, das es erlaubt, feuchte Materialien zu granulieren und deren Lager- und/oder Transporteigenschaften dadurch zu verbessern sowie optional die feuchten Materialien auf eine einfache und energiesparende Weise ganz oder teilweise zu trocknen. Darüber hinaus wird erfindungsgemäß ein Verfahren zur Granulierung von (trockenen) Pulvern oder Stäuben bereitgestellt.

Das erfindungsgemäße Verfahren sieht zum Einen eine Granulierung von feuchten Materialien vor, wobei die feuchten Materialien mit Wasser absorbierenden, quellfähigen organischen polymeren Materialien, bevorzugt Superabsorbern und/oder Hydrogelen, vermischt werden und in Granulate mit guten Lager- und/oder Transporteigenschaften, insbesondere einem guten Fließverhalten, überführt werden.

Ferner sieht die Erfindung die Granulierung von Pulvern oder Stäuben vor, indem diese mit wasserunlöslichen, Wasser absorbierenden, quellfähigen organischen polymeren Materialien wie Superabsorbern und/oder Hydrogelen sowie Wasser oder wasserhaltigen Stoffen gemischt werden, wodurch sich beim Mischen Granulate bilden. Bevorzugt wird zuerst gemischt und danach das Wasser zugesetzt.

Genauer ist die vorliegende Erfindung auf ein Verfahren zur Granulierung von teilchenhaltigem Material aus industriellen Verfahren gerichtet, bei dem das teilchenhaltige Material in Gegenwart von Wasser mit einem Material, das einen Gehalt an Wasser absorbierenden, wasserunlöslichen und quellfähigen organischen Polymermaterial hat oder daraus besteht, vermischt wird. Erfindungsgemäß kann das Wasser oder die Feuchtigkeit herstellungsbedingt gegebenenfalls auch weitere Stoffe wie Salze und Lösungsmittel enthalten, Um jedoch die Quellfähigkeit nicht nachteilig zu beeinflussen, sollte deren Gehalt möglichst niedrig sein.

Dabei kann das Wasser in Form von dem teilchenhaltigen Material anhaftender Feuchtigkeit vorliegen und/oder dem teilchenhaltigen Material und/oder der Mischung aus dem teilchenhaltigen Material mit dem Material, das einen Gehalt an dem organischen Polymermaterial hat, als Wasser zugegeben werden. Somit ist es möglich, dass in dem erfindungsgemäßen Verfahren das teilchenhaltige Material in feuchter Form und/oder in trockener Form, auch als Mischung unterschiedlicher teilchenhaltiger Materialien in feuchter oder trockener Form, eingesetzt wird. Erfindungsgemäß umfassen Angaben zu dem Feuchtegehalt des Materials die dem Material anhaftende Feuchtigkeit als auch gebundenes Kristallwasser, welches unter den Bedingungen der Feuchtebestimmung freigesetzt (105°C) wird. Dabei kann das teilchenhaltige Material erfindungsgemäß einen Feuchtegehalt von mehr als 5 Gew.-%, bevorzugt 10 bis 90 Gew.-%, besonders bevorzugt 20-85 Gew.-%, bezogen auf das Gewicht des teilchenhaltigen Materials, aufweisen. Die Erfindung sieht in einer weiteren Ausgestaltung somit vor, dass keine Komponente der Mischung vor Zuführung zur Mischung einer thermischen Behandlung unterworfen, insbesondere thermisch getrocknet, wird.

Optional erfolgt eine anschließende Trocknung der Granulate, wobei die geringe Staubbildung bei der Trocknung der Granulate dabei besonders vorteilhaft ist. Die Granulate trocknen in dünnen Schichten bei Raumtemperatur innerhalb weniger Stunden vollständig, ohne dass es großer Gasströme bedarf!

Als erste Beispiele zur Behandlung von feuchten Materialien werden hier genannt: Pigmente (u.a. TiO2, Eisenoxid), Titanhydrat, technisches Eisenoxid aus der thermischen Spaltung von Metallsulfaten (Abbrand) nach Auswaschen der löslichen Salze, Zubereitungen enthaltend Aufschlussrückstand aus der TiO₂-Herstellung, gefälltes ZnS und/oder BaSO₄, ZrO₂ Al₂O₃ oder sonstige aus wässriger Lösung gefällten (keramischen) Materialien. Als erste Beispiele zur Granulierung von Pulvern oder Stäuben werden hier genannt: Granulierung von Pigmenten, Füllstoffen, keramischen und pyrogen Pulvern, ZnO, MgO, Russkohlenstoff, Kohlestaub, Filterstäuben, Schleifstäuben, Gießereistäuben, Gesteinsstäuben, Metallstäuben, Aschen.

Das erfindungsgemäße Verfahren ist somit auf die Verwendung von teilchenhaltigen Materialien, die in industriellen Prozessen anfallen, und deren Überführung in Granulate als auch deren Verwendung gerichtet. Das erfindungsgemäß verwendete teilchenhaltige Material aus industriellen Prozessen enthält keine Rückstände aus Verfahren, die einen Schritt zur biologischen Behandlung von Abwässern aus Haushalt oder Industrie beinhalten, oder aus Verfahren, die eine biologische Verfahrensstufe, beispielweise unter Verwendung von Mikroorganismen, einschließen, und enthält somit keine Gärreste aus Biogasanlagen, Rückstände aus der Herstellung von Lebensmitteln wie Trübstoffe aus Bier, Most, Wein oder Säften, Rückstände aus der Landwirtschaft oder Rückstände aus der Reinigung von Haushaltsabwasser oder industriellem Abwasser.

Somit kann das das teilchenhaltige Material erfindungsgemäß anorganische oder organische Pigmente, bevorzugt Titandioxidpigmente, Eisenoxidpigmente, Chromoxidpigmente oder Pigmentruße, Rückstände aus der Titandioxidproduktion, insbesondere aus dem Sulfatverfahren oder Chloridverfahren, Eisensulfat-Heptahydrat, Grünsalz, Betonschleifschlamm, Schleifrückstände, Schleifschlämme, Lackschlämme, Füllstoffe, Kaolin, CaCO₃, BaSO₄, ZnS, Lithopone, Gips, Phosphatierschlamm, Löserückstände, Gangart, Schlämme aus Neutralisation, Gießereischlämme, Rückstände aus der galvanischen Industrie und aus Eindickern, Metallschlämme; Metallhydroxidschlämme oder metallhydroxidhaltige Schlämme, Bohrschlämme, keramische Zwischenprodukte wie z.B. Zirkonhydroxid, Aluminiumhydroxid, Aluminiumtitanat, Zirkontitanhydrat, Schlämme aus Erdgasförderung und-reinigung oder Mischungen davon enthalten oder daraus bestehen. Dabei liegt das teilchenhaltige Material vorzugsweise pH-neutral oder in einem pH-Bereich um den Neutralpunkt von pH 5 bis 9 vor, und gegebenenfalls enthaltene wasserlösliche Salze sind aus dem teilchenhaltigen Material bevorzugt ausgewaschen.

Die vorliegende Erfindung ist insbesondere auf der Granulierung von teilchenhaltigem Material aus industriellen Prozessen gerichtet, das anorganische oder organische Pigmente, bevorzugt Titandioxidpigmente, Eisenoxidpigmente, Chromoxidpigmente oder Pigmentruße, Rückstände aus der Titandioxidproduktion, insbesondere aus dem Sulfatverfahren oder Chloridverfahren, Eisensulfat-Heptahydrat, Grünsalz, BaSO₄, ZnS, Lithopone, Zirkonhydroxid, Aluminiumhydroxid, Aluminiumtitanat, Zirkontitanhydrat oder Mischungen davon enthält oder daraus besteht.

Das Verfahren zeichnet sich vorzugsweise dadurch aus, dass so Granulate mit einem mittleren Durchmesser von 0,1 bis 20 mm, bevorzugt 0,5 bis 10 mm, besonders bevorzugt 1 bis 5 mm, hergestellt werden können. Zur Bestimmung des Granulatdurchmessers wird die kleinste identifizierbare Feinstruktur des Materials zu Grunde gelegt. Das Verfahren zeichnet sich weiterhin vorzugsweise dadurch aus, dass die Restfeuchte der erhaltenen Granulate 40 bis 90 Gew.-%, bevorzugt 50 bis 85 Gew.-%, besonders bevorzugt 70 bis 85 Gew.-%, beträgt. Diese Angaben beziehen sich auf die Restfeuchte unmittelbar nach der Herstellung, wenn die Granulate das Granulieraggregat verlassen, da die Granulate an Luft rasch Feuchtigkeit abgeben können.

Die erhaltenen Granulate bilden ein nicht klebendes, transportfähiges, insbesondere pneumatisch förderbares und nicht zu Anbackungen neigendes Schüttgut. Die Granulate kleben dabei weder aneinander noch an der Wand von Behältern. Bei geringer Dosiermenge des Additivs können die einzelnen Granulate zwar aneinander haften; diese Haftung ist jedoch nicht dauerhaft und die Granulate lösen sich wieder leicht voneinander. Sich zwischenzeitlich bei der Lagerung durch Druck ausbildende kompakte Gebilde ("Schneebälle") zerfallen bereits bei Einwirkung geringer Scherkräfte wieder in die Ausgangsgranulate.

Die Morphologie und Partikelgröße der Granulate ist dabei abhängig von Art und Menge des oder der Additive sowie Art und Intensität der Mischung bzw. des Mischaggregats. Auch die Zusammensetzung der feuchten Materialien sowie die Partikelgröße des Additivs können einen Einfluss haben. Bevorzugt wird durch geeignete Auswahl und Dosiermenge der Additive eine geeignete Granulatgröße eingestellt. Diese Zusammenhänge können für die jeweilige Zusammensetzung der feuchten Materialien durch einfache routinemäßige Mischversuche ermittelt werden. Dabei gilt: Je höher die Dosiermenge, desto feinere Granulatpartikel werden erhalten.

Als Mischaggregat können alle Mischer, Rührer, Kneter oder sonstige Vorrichtungen verwendet werden, welche eine hinreichend große Homogenität des Mischguts in vertretbarer Zeit ermöglichen. Vorteilhaft sind dabei Vorrichtungen mit schnelllaufenden Mischwerkzeugen. Aber auch Kneter sind grundsätzlich geeignet. Typische Mischzeiten zur Ausbildung der erfindungsgemäßen Granulate betragen in Vorrichtungen mit schnelllaufenden Mischwerkzeugen etwa ein bis drei Minuten. Dabei können alle Komponenten entweder nacheinander oder auch gemeinsam in die Mischvorrichtung gegeben werden. Die Mischung kann kontinuierlich oder diskontinuierlich erfolgen.

Auch ist es möglich, dass zur Erhöhung der Stabilität der Granulate zusätzlich 0,1 bis 20 Massen-%, bevorzugt 0,1 bis 5 Massen-%, besonders bevorzugt 0,1 bis 3 Massen-%, Materialien, welche Wasser oder Feuchtigkeit chemisch binden können, bevorzugt Zement, insbesondere Zement mit einer Abbindezeit von weniger als 1 Stunde, gebrannter Kalk, Flugasche, Anhydrid oder Salze, welche in der Lage sind in eine kristallwasserreichere Form überzugehen, zugegeben werden. Auf diese Weise können die erhaltenen Granulate mechanisch stabilisiert sowie hinsichtlich ihrer Lager- und Transporteigenschaften weiter verbessert werden.

Unter Feuchtigkeit- oder Wasser-absorbierenden organischen Polymermaterialien werden erfindungsgemäß in erster Linie so genannte "Superabsorber" subsumiert. Unter dem Begriff "Superabsorber" werden im Rahmen der vorliegenden Erfindung solche Polymere zusammengefasst, die in der Lage sind, durch Quellung ein Mehrfaches ihres eigenen Gewichts - bis zum 1000-fachen - an Wasser oder anderen Flüssigkeiten aufzunehmen und die absorbierte Flüssigkeitsmenge auch unter einem bestimmten Druck zurückzuhalten. Superabsorber können natürlichen oder synthetischen Ursprungs sein. Aus der DE 202011002784 sind als Beispiele für natürliche Superabsorber Kartoffelstärke oder Polysaccharide allgemeiner Art bekannt, die erfindungsgemäß ebenfalls Verwendung finden können.

Chemisch handelt es sich bei einem Superabsorber in der Regel um ein sogenanntes Basispolymer, insbesondere ein aus Acrylsäure (Propensäure, C₃H₄O₂) und Natriumacrylat (Natriumsalz der Acrylsäure; NaO₂C₃H₃) bestehendes Copolymer, wobei das Verhältnis der beiden Monomere zueinander variieren kann. Zusätzlich wird ein sogenannter Kernvernetzter der Monomerlösung zugesetzt, der die gebildeten langkettigen Polymermoleküle stellenweise untereinander durch chemische Brücken verbindet (vernetzt). Durch diese Brücken wird das Polymer wasserunlöslich. Die durch die dreidimensionale Vernetzung bewirkte Unlöslichkeit in Wasser ist ein wesentliches Merkmal der erfindungsgemäß verwendeten Superabsorber oder Hydrogele. Diese Wasserunlöslichkeit unterscheidet diese Materialen von chemisch sehr ähnlichen Flockungsmitteln oder Flockungshilfsmitteln. Beim Eindringen von Flüssigkeit oder Feuchtigkeit in ein Polymerpartikel quillt dieses auf und strafft auf molekularer Ebene dieses Netzwerk, so dass die Flüssigkeit oder Feuchtigkeit gebunden wird.

Superabsorber sind i.d.R. kleine, pulverförmige Teilchen mit Durchmessern vom Nanometerbereich bis hin zu mehreren hundert Mikrometern, können aber auch eine Größe im Millimeter-Bereich aufweisen. Im Allgemeinen werden synthetische Superabsorber hergestellt, indem teilneutralisierte Acrylsäuren in wässriger Lösung in Gegenwart von mehrfunktionellen Vernetzern durch radikalische Reaktion zu einem Gel polymerisiert werden, welches getrocknet, zermahlen und in die gewünschte Partikelgröße klassiert wird.

Solche Verfahren zur Herstellung der "Superabsorber" sind im Stand der Technik vielfach bekannt. Beispielhaft sind hier US 4286082, DE 2706135, US 4076663., US 4340706, DE 3713601, DE 2840010, DE 10130427, der DE 4020780, der DE 10161496 DE 102005021221 genannt.

Auch sind Superabsorber bekannt, die bei der Umsetzung von natürlichen Verbindungen mit synthetischen Materialien oder Monomeren entstehen. Solche Produkte sind beispielsweise beschrieben in R. Dhodapkar, N.N. Rao, S.P. Pande, S.N. Kaul, Biosource Technology, 97 (2006) 887-885 und R. Dhodapkar, N.N. Rao, S.P. Pande, T. Nandy, S. Devotta, Reactive and Functional Polymers, 67 (2007) 540-548. Diese Superabsorber sind bei vergleichbaren Eigenschaften umweltfreundlicher als rein synthetische Produkte und i.d.R. besser biologisch abbaubar.

Ferner ist bekannt, dass die im Sinne der vorliegenden Erfindung verwendbaren Superabsorber aus polymeren Kügelchen bestehen können, die von innen nach außen zunehmend vernetzt sind (Ullmanns Encyclopedia of Industrial Chemistry, 6th. Edition, Vol. 35 pp 73, 2003 und DE 202005020566). Der Vorteil dieses Vernetzungsgradienten ("Kern-Mantel-Struktur") liegt darin, dass die erwähnten Kügelchen unter mechanischer Belastung (Druck) die Feuchtigkeit besser halten.

Weiterhin sind Hybridmaterialien bestehend aus polymeren Superabsorbern in Kombination mit organischen und/oder anorganischen Hohlkugeln bekannt (DE 102009016404). Der Vorteil der Kombination mit Hohlkugeln liegt darin, dass die Superabsorber- Hybridmaterialien die Feuchtigkeit schneller aufnehmen, als die polymeren Superabsorber allein, ohne dass die Kapazität der Wasseraufnahme wesentlich reduziert wird. Insofern stellen auch diese Hohlkugeln aufweisenden Materialien im Sinne der vorliegenden Erfindung ebenfalls einen Superabsorber oder ein Feuchtigkeit absorbierendes organisches polymeres Material dar.

Es sind eine ganze Reihe weiterer superabsorbierender Stoffe bekannt, die ein Gemisch aus polymeren Superabsorbern und gemahlenen mineralischen Zusätzen ausbilden (DE 202006020295, DE 102005021221, DE 102009034137, DE 202007016362, DE 202011002784, DE 202011003679, WO 2006/119828). Die mineralischen Zusätze können entweder selber eine Wasser aufnehmende Wirkung haben (z.B. Bentonite) oder aber indirekt wirken, indem sie das Durchströmungsverhalten des Superabsorbers für Flüssigkeiten verbessern und so die Geschwindigkeit der Bindung der Feuchtigkeit günstig beeinflussen. Eine Kombination von absorbierenden Polymeren, mineralischen Zusätzen und Alginat aus Seealgen, vor allem Braunalgen, ist ebenfalls bekannt (DE 29516675).

In der Süperabsorbertechnologie wird weiterhin zwischen Superabsorbern und Hydrogelen unterschieden. Während man unter Superabsorbern die nahezu trockenen, Wasser ziehenden Substanzen versteht, sind Hydrogele bereits ganz oder teilweise gequollene Superabsorber. So können Superabsorberteilchen Teilchen aus superabsorbierendem Polymer im trockenen Zustand, speziell Teilchen, die entweder überhaupt kein Wasser oder bis zu etwa 10 Gew.-% Wasser enthalten, sein wie dies die DE 602004002202 offenbart ist. Die Begriffe Superabsorbergel, Superabsorberhydrogel beziehen sich dann auf ein superabsorbierendes Polymer mit einem Wassergehalt von mindestens etwa 10 Gew.%, typischerweise auf Teilchen, die mindestens ihr Eigengewicht und typischerweise ein Vielfaches ihres Eigengewichts an Wasser aufgenommen haben.

Unter einem Hydrogel wird im Rahmen der vorliegenden Erfindung grundsätzlich ein Flüssigkeit oder Feuchtigkeit aufnehmendes und dann enthaltendes, aber wasserunlösliches Polymer verstanden, dessen Moleküle chemisch, z.B. durch kovalente oder ionische Bindungen, oder physikalisch, z.B. durch Verschlaufen der Polymerketten, zu einem dreidimensionalen Netzwerk verknüpft sind. Durch eingebaute hydrophile Polymerkomponenten quellen die Polymerketten in Flüssigkeit (Wasser, Säure, salzhaltige Lösung) oder unter Feuchtigkeitseinfluss unter beträchtlicher Volumenzunahme auf, ohne ihren stofflichen Zusammenhalt zu verlieren.

Die Anwendung von bereits vorgequollenen Superabsorbergelen bzw. Hydrogelen oder Superabsorberhydrogelen - dies sind alles Bezeichnungen, die denselben Zustand beschreiben - kann erfindungsgemäß deswegen vorteilhaft sein, weil Hydrogele, die noch nicht an Flüssigkeit gesättigt sind, in manchen Fällen weitere Flüssigkeit schneller aufnehmen. Erfindungsgemäß sind alle zuvor genannten organischen Polymermaterialien verwendbar, und somit umfasst die vorliegende Erfindung somit auch die Anwendung von Hydrogelen zur Granulierung von feuchten Materialien.

Von der "European Disposables and Nonwovens Association", Avenue Eugene Plasky, 157-1030 Brüssel, Belgien (EDNA) existiert eine Schrift "EDNA Recommended Test Methods" (kurz: ERT) aus dem Jahr 2002, in der unter anderem drei Verfahren beschrieben werden, die das Quellverhalten kennzeichnen. Diese sind:
- "Free Swell Capacity" (FSC) ERT 440.2-02
- Centrifuge Retention Capacity, (CRC) ERT 441.2-02
- Absorption under Pressure, (AUP) ERT 442.2-02.

Alle vorstehend aufgeführten Materialen stellen Feuchtigkeit absorbierende organische polymere Materialien im Sinne der vorliegenden Erfindung dar. Insbesondere werden unter einem Feuchtigkeit absorbierenden organischen polymeren Material alle Superabsorber oder aber superabsorbierenden Zusammensetzungen verstanden, die Superabsorber oder Hydrogele enthalten, die dadurch gekennzeichnet sind, dass sie gemäß EDNA ERT 440.2-02 (bzw. ISO 17190-5:2001) eine Quellfähigkeit (FSC-Wert) von mindestens 4 g/g, bevorzugt 10 g/g und besonders bevorzugt mehr als 30 g/g aufweisen.

Vorzugsweise enthalten die Feuchtigkeit absorbierenden organischen polymeren Materialien Polymerisate der Acrylsäure, bevorzugt ein Copolymer aus Natriumacrylat und Acrylamid, oder sind daraus aufgebaut. Die vorstehend angegebenen Superabsorber oder Hydrogele oder diese enthaltenden Stoffe oder Materialien sind somit Bestandteil des Erfindungsgegenstandes. Besonders vorteilhaft an den Superabsorbern oder Hydrogelen ist, dass aufgrund ihres großen Wasserbindungspotenzials nur eine geringe Dosiermenge benötigt wird. Auf diese Weise wird die Gesamtmasse des zu granulierenden Materials nur unwesentlich erhöht und der Aufwand für das Mischen, Verpacken, Lagern und Transportieren hält sich in Grenzen.

Es hat sich gezeigt, dass die Superabsorber nur einen kleinen Teil des vorhandenen Wassers absorbieren müssen, um eine erhebliche Veränderung der Konsistenz des zu granulierenden Materials (Suspension, Schlamm, Filterkuchen oder Paste) zu erreichen. Aufgrund der geringen Zusatzmenge der Superabsorber ist die Restfeuchte der erhaltenen Granulate in der Regel kaum verändert im Vergleich zum Zustand vor Zugabe der Superabsorber. Mit Hilfe der Superabsorber oder Hydrogele können deshalb stabile und gut handhabbare Granulate mit einem in der Regel sehr hohen Wassergehalt erhalten werden.

Die Zugabemenge der Feuchtigkeit, bzw. Wasser absorbierenden, quellfähigen organischen polymeren Materialien kann 0,01 bis 10 Gew.-%, bevorzugt 0,1 bis 5 Gew.-%, besonders bevorzugt 0,8 bis 3,5 Gew.-%, bezogen auf die Gesamtmasse des teilchenhaltigen Materials, betragen.

Beispielsweise können Verwendung finden Luquasorb 1161 der Firma BASF oder Favor der Firma Evonik. Bei gleicher Dosierung bzw: Verarbeitung können mit Luquasorb 1161 etwas feinere Granulate erhalten werden.

Weiterhin können die Granulate ein Massenverhältnis von Wasser zu organischem Polymer von 5 bis 1000, vorzugsweise 10 bis 200, insbesondere 25 bis 100, aufweisen.

Auch können die Granulate ein Massenverhältnis von Wasser zu Kohlenstoff, insbesondere in organischen Verbindungen vorliegender Kohlenstoff, von 10 bis 2000, vorzugsweise 20 bis 400, insbesondere 50 bis 200, aufweisen.

Des Weiteren können die Granulate in Ausgestaltung der Erfindung auch dadurch gekennzeichnet sein, dass sie ein Verhältnis von Glühverlust (in Gew.-%) zu Kohlenstoff (in Gew.-%) von 10 bis 2000, vorzugsweise 20 bis 400, insbesondere 50 bis 200, aufweisen.

Insbesondere sind die Granulate zweckmäßigerweise pneumatisch förderbar ausgebildet.

Ferner zeichnen sich die die Granulate dadurch aus, dass sie eine Schüttdichte von weniger als 1,6 g/cm3, bevorzugt weniger als 1,2 g/cm3, besonders bevorzugt weniger als 1,0 g/cm3, und/oder eine Stampfdichte (1000 Hübe im Stampfvolumeter nach DIN 53194) von weniger als 1,7 g/cm3, bevorzugt weniger als 1,5 g/cm3, besonders bevorzugt weniger als 1,4 g/cm3, aufweisen.

Die Granulate zeichnen sich vorzugsweise weiterhin dadurch aus, dass der Anteil der Granulate, der eine Teilchengröße zwischen 1 und 5 mm aufweist, mindestens 50 Gew.-%, vorzugsweise mindestens 70 Gew.-%, insbesondere mindestens 80 Gew.-%, der Gesamtmasse beträgt. Die Bestimmung dieses Anteils erfolgt durch (lichtmikroskopische) Auszählung unter Annahme einer konstanten Dichte und einer kugelförmigen Gestalt der einzelnen Partikel.

Es ist auch möglich eine Kombination eines Superabsorbers und eines feinteiligen, pulverförmigen Materials zur Granulierung feuchter Materialien zu verwenden, sofern das feinteilige, pulverförmige Material der weiteren Verwendung nicht abträglich ist. Auf diese Weise kann die benötigte Menge an Superabsorber zur Ausbildung geeigneter Granulate verringert werden. Beispielsweise können für die Ausbildung von Pigmentgranulaten einer Feuchtigkeit enthaltenden Pigmentzubereitung neben dem Superabsorber zusätzlich Füllstoffe zugegeben werden.

In einer weiteren Ausgestaltungsform der Erfindung ist es aber auch möglich, dass außer einem Superabsorber oder Hydrogel dem zu granulierenden Material keine weiteren Zusätze zugegeben werden.

Es ist auch möglich, als Superabsorber oder Hydrogel sogenannte "off-spec"-Ware zu verwenden, d.h. Materialien, die fehlerhaft hergestellt oder behandelt wurden. Aufgrund der hohen Qualitätsanforderungen an Stoffe, die mit dem menschlichen Körper in Kontakt kommen können, kann es vorkommen, dass Superabsorber oder Hydrogele zwar für Hygieneanwendungen nicht (mehr) geeignet sind, z.B. wegen mikrobiologischer Verunreinigungen, für die Granulierung aber völlig problemlos verwendbar sind. Insofern kann das erfindungsgemäße Verfahren eine praktikable und wirtschaftlich attraktive Verwertungsmöglichkeit für derartige Fehlchargen darstellen.

Vorzugsweise kann das zu granulierende Material vor der Zugabe des Superabsorbers mechanisch entwässert werden, beispielsweise mittels einer Filterpresse, einer Zentrifuge oder einer Entwässerungsschnecke. Dabei kann vorzugsweise ein Trockenstoffgehalt von 10 bis 80 Gew.-%, bevorzugt 15 bis 60 Gew.-%, besonders bevorzugt 20 bis 35 Gew.-%, erreicht werden. Nach der mechanischen Entwässerung liegt das zu granulierende Material bevorzugt in stückiger oder pastöser Form vor und wird dann mit dem Superabsorber vermischt und in ein Granulat überführt. Die Vermischung kann kontinuierlich oder diskontinuierlich erfolgen. Eine kontinuierliche Vermischung kann anfängliche Anbackungen besser vermeiden. Die mechanische Entwässerung ist vorteilhaft, da auf diese Weise nur vergleichsweise geringe Mengen an Additiven erforderlich sind, um die erfindungsgemäßen Granulate auszubilden.

Die erfindungsgemäß erhaltenen Granulate weisen gute Lager- und Transporteigenschaften auf und können als Schüttgut in Behälter gefüllt und aus diesen wieder entnommen werden. Insbesondere sind die Granulate dadurch gekennzeichnet, dass sie pneumatisch förderbar sind.

In einer bevorzugten Ausgestaltung der Erfindung wird im Anschluss an die Granulierung der Feuchtegehalt der erhaltenen Granulate durch Kontakt mit einem gasförmigen Medium, bevorzugt mittels Wirbelschicht- oder Fließbetttrocknung, und/oder durch Zuführung thermischer Energie verringert. Die Granulate können getrocknet werden, indem ein gasförmiges Medium, z.B. Luft, durch die Granulate oder an den Granulaten vorbei geleitet wird. Aufgrund der im Vergleich zum flüssigen, pastösen oder stückigen Ausgangsmaterial deutlich vergrößerten Oberfläche der Granulate erfolgt die Trocknung sehr rasch.

Gegenüber einem stückigen Material mit einem angenommenen durchschnittlichen Durchmesser von 20 cm (ein nicht untypischer Wert für Filterkuchen aus einer Filterpresse) wird die geometrische Oberfläche von Granulaten mit einem Durchmesser von 10 mm um den Faktor 20 größer, bei einem Durchmesser von 1 mm beträgt der Faktor der Oberflächenvergrößerung 200, bei einem Durchmesser von 0,1 mm beträgt der Faktor der Oberflächenvergrößerung 2000.

Hinzu kommt, dass die Zeit, die das Wasser benötigt, um vom Innern eines Partikels an dessen Oberfläche zu gelangen, bei kleineren Partikeln erheblich geringer ist als bei großen. Bei einem guten Gasaustausch an der Oberfläche der Partikel kann dies der die Geschwindigkeit bestimmende Schritt für die Trocknung sein.

Als gasförmiges Medium kann Luft, bevorzugt erwärmte Luft mit einer Temperatur von weniger als 70°C, besonders bevorzugt mit einer Temperatur von 40 bis 60°C, verwendet werden. Besonders vorteilhaft ist es, den Feuchtegehalt der bei der Mischung erhaltenen Granulate mit einem Gas zu trocknen, welches Abwärme enthält, die anderweitig nicht verwertbar ist. So kann die Abwärme eines industriellen Verbrennungsprozesses genutzt werden, welche sich nicht mehr zur Erzeugung von Elektrizität oder Dampf verwenden lässt.

Aufgrund der großen geometrischen Oberfläche der Granulatpartikel kann aber auch mit Luft mit einer Temperatur von weniger als 50°C, bevorzugt von weniger als 40°C, besonders bevorzugt von weniger als 30°C, getrocknet werden. Dies hat den Vorteil, dass entweder nur geringe oder gar keine Energiekosten für die Trocknung erforderlich sind.

Aufgrund der guten Lager- und Transportfähigkeit der Granulate können diese auch problemlos an einen Ort verbracht werden, an welchem derartige Abwärme anfällt. Auch wird eine Lagerung in Silos oder ein Transport in Silofahrzeugen ermöglicht. Weiterhin ist es möglich, die Trocknung der Granulate im Silofahrzeug vorzunehmen, indem Luft durch das Silo geleitet wird.

In einer Ausgestaltungsform der Erfindung liegen die erhaltenen Granulate in Form einer Schüttung in einem Schüttgutbehälter vor, bevorzugt einem Silo, welches mit einem Gas durchströmt wird, besonders bevorzugt von unten nach oben durchströmt wird. Die Gasgeschwindigkeit wird dabei vorzugsweise so gewählt, dass die erhaltenen Granulate in Form eines Festbetts vorliegen und keine makroskopische Bewegung aufweisen.

Alternativ können die erhaltenen Granulate in Form einer flach ausgebreiteten Schüttung vorliegen, wobei die Dicke der Schüttung kleiner als 0,5 m, bevorzugt kleiner als 0,3 m, besonders bevorzugt kleiner als 0,1 m, ist. Auf diese Weise wird aufgrund der großen geometrischen Oberfläche der Granulatpartikel eine wirksame Trocknung erreicht, ohne dass aufwändige mechanische Verfahren zum Wenden der Granulatschüttung erforderlich sind. Der Trocknungseffekt kann zusätzlich beschleunigt werden, indem die Granulate von einem Gasstrom überstrichen werden, welcher bevorzugt von Ventilatoren erzeugt wird.

Auch bei Zuführung thermischer Energie wird durch die Ausbildung der Granulatform die Trocknung begünstigt, insbesondere in Geräten, welche den zu trocknenden Stoff derartig mechanisch behandeln, dass "frische" Oberfläche erzeugt wird. Besonders bevorzugt werden dabei Trocknungsaggregate, welche nach dem Prinzip der Kontakttrocknung operieren, beispielsweise Trommel-, Taumel-, Teller-, Schnecken- oder Schaufeltrockner.

Es ist auch möglich, dass keine fertig ausgebildeten Granulate dem Trockner zugeführt werden, und dass die Granulate im Trockner erzeugt bzw. fertig granuliert werden, indem die Feuchtigkeit absorbierenden organischen polymeren Materialien, insbesondere Superabsorber und/oder Hydrogele, zusammen mit dem zu trocknenden Stoff im Trocknungsaggregat durch mechanische Einwirkung vermischt werden. Es ist dabei möglich die Komponenten entweder gemeinsam oder räumlich und/oder zeitlich getrennt in das Trocknungsaggregat einzubringen. Besonders vorteilhaft ist die Ausbildung von Granulaten im Trocknungsaggregat durch Zugabe eines Superabsorbers oder Hydrogels, wenn das zu trocknende Material zur Ausbildung von Anbackungen neigt oder thixotropes Verhalten zeigt.

Besonders vorteilhaft ist das erfindungsgemäße Verfahren bei zu trocknenden Materialien mit einer hohem Abrasivität. Durch die Ausbildung von Granulaten kann die abrasive Wirkung derartiger Materialien deutlich verringert werden. Dies wird beispielsweise dadurch ermöglicht, dass die Granulate in einem Trommeltrockner überwiegend keine schleifenden, sondern rollende Bewegungen ausführen. Zusätzlich wird es aufgrund der Granulatstruktur mit ihrer großen geometrischen Oberfläche ermöglicht, dass beim Trocknungsprozess die Schaffung neuer Oberflächen unterbleiben kann, so dass auf die Anwendung von Scherkräften und die damit einhergehende abrasive Wirkung weitgehend verzichtet werden kann. Besonders vorteilhaft bei abrasiven Materialien ist die Verwendung eines Trommeltrockners. Aufgrund des günstigen Oberflächen-Volumen-Verhältnisses eines Trommeltrockners ist der Anteil der Granulatpartikel, der die Trocknerwand berührt, relativ gering.

Besonders vorteilhaft ist das erfindungsgemäße Verfahren auch bei zu trocknenden Materialien, welche zur Entmischung neigen, beispielsweise bei einer Sprühtrocknung. Durch die Granulatstruktur wird die Zusammensetzung "fixiert" und zusätzlich erfolgt die Trocknung über einen längeren Zeitraum, so dass eine Entmischung verhindert werden kann.

Durch die guten rheologischen Eigenschaften der Granulate kann sowohl für die Trocknung als auch für einen anschließenden thermischen Verarbeitungsschritt (z.B. Kalzinierung) eine verbesserte Homogenität und ein erhöhter Durchsatzes erzielt werden, da die guten rheologischen Eigenschaften der Granulate dafür sorgen, dass alle Granulate von allen Seiten einen optimalen Kontakt zur Gasphase bzw. zum Trocknungsgas aufweisen. Somit kann durch die Granulierung eine Durchsatzerhöhung bei Trocknung oder thermischer Behandlung erzielt werden.

Weiterhin vorteilhaft ist das erfindungsgemäße Verfahren auch bei zu trocknenden Materialien, welche keine höheren Temperaturen vertragen. Durch die Granulatstruktur wird eine schonende Trocknung bei Raumtemperatur ermöglicht. Vorzugsweise kann der Feuchtegehalt der getrockneten Granulate weniger als 30 Gew.-%, bevorzugt 5 bis 25 Gew.-%, besonders bevorzugt 10 bis 20 Gew.%,, betragen.

Der Feuchtegehalt bzw. die Feuchte bzw. die Restfeuchte (alle diese Begriffe werden hier synonym verwendet) entspricht dem Gewichtsverlust, welcher bei 105°C im Trockenschrank bis zur Erreichung der Massenkonstanz eintritt.

Massenkonstanz gilt als erreicht, wenn die Massenänderung zwischen 30-minütigen Wägeintervallen weniger als 0,1% absolut beträgt. Der Trockenstoffgehalt (oder Feststoffgehalt) in % entspricht 100% minus der Restfeuchte (in %).

Der Glühverlust der Zubereitung kann 10-60 Gel.-%, vorzugsweise 20-45 Gew.-%, insbesondere 25-40 Gew.-%, betragen. Der Glühverlust entspricht dem Gewichtsverlust, welcher bei 1 Stunde bei 1000°C im Muffelofen eintritt.

Gegenstand der Erfindung sind außerdem Granulate, welche nach einem der beanspruchten Verfahren erhältlich sind.

Vorzugsweise weisen die Granulate einen mittleren Durchmesser von 0,1 bis 20 mm, bevorzugt 0,5 bis 10 mm, besonders bevorzugt 1 bis 5 mm, auf.
Der Trockenstoffgehalt der Granulate ohne einen nachgeschalteten Trocknungsschritt beträgt vorzugsweise 10 bis 60 Gew.%, bevorzugt 15 bis 50 Gew.-%, besonders bevorzugt 15 bis 30 Gew.-%.

Vorzugsweise beträgt der Volumenanteil der Hohlräume in der Granulatschüttung 2 bis 35 Vol.-%, bevorzugt 5 bis 25 Vol.-%, besonders bevorzugt 10 bis 20 Vol.-%. Die optimale Granulatgröße ergibt sich aus den angestrebten Verwendungen.

Wenn die erhaltenen Granulate getrocknet werden sollen, ist es vorteilhaft ein Granulat bereitzustellen, welches einerseits eine möglichst große geometrische Oberfläche aufweist, andererseits aber nicht durch den zur Trocknung verwendeten Gasstrom weggeblasen wird. Bevorzugt werden deshalb Granulate mit einem mittleren Durchmesser (Volumenmittelwert) von 0,1 bis 20 mm, bevorzugt 0,5 bis 10 mm, besonders bevorzugt 1 bis 5 mm hergestellt. Die Bestimmung der Granulatgröße und des Massenanteils erfolgt durch (lichtmikroskopische) Auszählung unter Annahme einer konstanten Dichte und einer kugelförmigen Gestalt der einzelnen Partikel.

Je höher die Dosiermenge des oder der Additive gewählt wird, desto feiner werden üblicherweise die Granulatpartikel. Wenn ausreichend Zeit und Raum für die Trocknung verfügbar ist, können die Granulate auch einen durchschnittlichen Durchmesser von mehr als 5 mm aufweisen, wenn jedoch der Trocknungsprozess sehr effizient durchgeführt werden soll, sind kleinere Granulate anzustreben. Entsprechend sind die Kosten des Verfahrens bei feinen Granulaten aufgrund der Kosten der Additive höher.

Wenn die Staubbildung bei der Trocknung möglichst gering gehalten werden soll, sind größere Granulate anzustreben.

In jedem Fall ist es vorteilhaft eine Schüttung der Granulate anzustreben, welche ein möglichst großes Hohlraumvolumen und einen möglichst geringen Strömungswidersand für das zur Trocknung verwendete Gas aufweist. Dies wird vorzugsweise dadurch erreicht, indem keine zu feinen Granulate und eine weitgehend einheitliche Granulatgröße verwendet werden. Bevorzugt ist die Schüttdichte der (nicht getrockneten) Granulate mindestens 10%, besonders bevorzugt mehr als 20% geringer als die Dichte des zu granulierenden Materials vor der Zugabe der Additive.

Besonders bevorzugt ist die Herstellung von Granulaten mit einer mittleren Größe von 0,5 bis 10 mm, insbesondere 1 bis 5 mm, mit einer anschließenden Trocknung, bei der nur eine geringe mechanische Belastung der Granulate erfolgt. Auf diese Weise kann auf eine Entstaubung bei der Trocknung ganz verzichtet werden oder aber es kann ein einfaches und kostengünstiges Verfahren zur Entstaubung gewählt werden (z.B. Zyklon oder Nasswäscher).

Besonders vorteilhaft ist eine Fließbett-Trocknung, da hierbei durch das Zusammenwirken von Gasstrom und mechanischer Einwirkung (z.B. Vibration) einerseits eine gute Durchmischung der Granulate und andererseits eine geringe Staubbildung erreicht wird.

Es kann vorteilhaft sein bei der Ausbildung von Granulaten, insbesondere Pigmentgranulaten, neben dem Superabsorber oder Hydrogel zusätzlich Dispergierhilfsmittel oder Bindemittel zuzugeben, um die Dispergierbarkeit oder Stabilität der erhaltenen Granulate gezielt einzustellen.

Ebenso kann vorgesehen sein, dass die Granulate einen hydraulisch abbindenden Zusatz, insbesondere ein Bindemittel, enthalten. Beispielsweise können die Granulate Zement, insbesondere Zement mit einer Abbindezeit von weniger als 1 Stunde enthalten.

Alternativ kann eine thermische Behandlung der mittels Zusatz von Superabsorbern erhaltenen Granulate den Superabsorber zersetzen und zu Granulaten führen, die frei von organischen Verbindungen sind und die sich besser dispergieren lassen.

Die vorliegende Erfindung ist besonders geeignet für die Herstellung von Zubereitungen und Granulaten unter Verwendung von Rückständen aus der Titandioxidherstellung.

Die Erfindung richtet sich somit bevorzugt auf eine Zubereitung oder ein Granulat enthaltend einen TiO₂-Rückstand aus der Titandioxidherstellung sowie ein Wasser absorbierendes, wasserunlösliches und quellfähiges organisches Polymermaterial wie einen Superabsorber.

Der TiO₂-Rückstand ist vorteilhafterweise ein bei der Titandioxidherstellung nach dem Sulfatverfahren anfallender Aufschlussrückstand oder umfasst einen solchen. Auch kann die Zubereitung dadurch gekennzeichnet sein, dass der TiO₂-Rückstand ein bei der Titandioxidherstellung nach dem Chloridverfahren, vorzugsweise aus dem Chlorierreaktor, anfallender Rückstand ist, der insbesondere noch einem Aufbereitungsschritt unterzogen wird, oder einen solchen Rückstand enthält. Der Aufbereitungsschritt kann beispielsweise eine Neütralisierung und/oder Wäsche zur Entfernung wasserlöslicher Verbindungen sein.

Dieses organische Polymermaterial nimmt bei der (Ver)Mischung mit dem TiO₂-Rückstand oder den TiO₂-Rückständen die darin enthaltene Feuchtigkeit zumindest teilweise auf, so dass eine Zubereitung oder Mischung bzw. Granulat erhalten wird, wobei die zunächst in dem TiO₂-Rückstand oder in den TiO₂-Rückständen vorhandene Feuchtigkeit oder das vorhandene Wasser nun in dem feuchtigkeitsabsorbierenden und/oder feuchtigkeitsbindenden, insbesondere wasserbindenden, Material, insbesondere in dessen organischem Bestandteil oder dessen organischen Bestandteilen, zumindest teilweise gebunden ist. Damit wird eine nicht klebende, transportfähige, insbesondere pneumatisch förderbare und nicht zu Anbackungen neigende Zubereitung oder ein solches Schüttgut erhalten.

So ist es beispielsweise möglich bei Verwendung von 0,6 Gew.-% von Luquasorb 1161 der Firma BASF etwa 1 bis 2 mm große Granulate herzustellen. Bei einer Erhöhung der Zusatzmenge können auch feinteiligere Granulate erzeugt werden. Durch Zusatz geeigneter Bindemittel (z.B. eines feinteiligen Titanoxidhydrats mit einer BET-Oberfläche von mehr als 200 g/cm3 oder einer Titanylsulfatlösung oder Zement) kann die Stabilität dieser Granulate, insbesondere nach thermischer Behandlung, erhöht werden, so dass die Granulate für den Einsatz in Wirbelöfen sowohl hinsichtlich der Partikelgröße als auch -Stabilität besonders geeignet sind.

Auf diese Weise sind Granulate erhältlich die nach Trocknung und/oder Kalzinierung eine mittlere Teilchengröße von 100 bis 900 µm, bevorzugt 150 bis 600 µm, besonders bevorzugt von 200 bis 400 µm, aufweisen.

Bevorzugt erfolgt die Zugabe des Bindemittels, insbesondere Zement, nach der Zugabe der wasserbindenden Materialien und Ausbildung der Granulate, da auf diese Weise ein Abbinden und Aushärten der gesamten Masse vermieden wird.

Besonders, wenn bei der Weiterverarbeitung oder Weiterverwendung der erfindungsgemäßen Zubereitung die Anwesenheit von Feuchte bzw. Wasser unkritisch ist, kann eine teure, logistisch aufwändige, separate oder zusätzliche Trocknung von TiO₂-Rückstan oder Aufschlussrückstand unter Umständen entfallen.

Zusammenfassend zeigt die Erfindung die Vorteile, dass durch das wasserbindende Material TiO₂-Rückstände in eine gut handhabbare Form überführt werden können, so dass auch ein Transport als Schüttgut oder eine pneumatische Förderung ermöglicht wird. Ein Trocknungsschritt ist nicht zwingend erforderlich.

Besonders vorteilhaft ist, dass nur eine geringe Menge des wasserbindenden Materials benötigt wird. Auf diese Weise wird die Gesamtmenge nur unwesentlich erhöht und der Aufwand für das Mischen, Verpacken, Lagern und Transportieren hält sich in Grenzen.

Die erhaltene Mischung oder Zubereitung ist gut lagerfähig und transportfähig.

Die erhaltene Zubereitung ist vielfältig einsetzbar, verwendbar oder weiterverarbeitbar. Insbesondere eignet sich die Zubereitung für die Verwendung in metallurgischen Prozessen, zur Herstellung von Feuerfestmaterialien, als titanhaltiger Zusatz für Schweißanwendungen oder zur Herstellung von titanhaltigen Beschichtungen von Schweißelektroden oder zur Herstellung von Schweißpulver oder als Katalysator oder Photokatalysator oder zur Herstellung von Katalysatoren oder Photokatalysatoren, zur Herstellung von Schwermetalladsorbern, zur Herstellung von Deponieabdeckungen oder als Baustoff, was die Erfindung in Ausgestaltung vorsieht.

Nach Trocknung und gegebenenfalls einer Mahlung der Zubereitung sind vorzugsweise Anwendungen als Füllstoff für Gummi, Thermoplaste oder Kunststoffe, oder als Asphaltfüller möglich.

Nach Kalzinierung der Zubereitung sind vorzugsweise Anwendungen als Abrasiv, insbesondere für das Wasserstrahlschneiden, oder als titanhaltiger Rohstoff für die Herstellung von Titandioxid nach dem Chloridverfahren bzw. zur Herstellung von Titantetrachlorid möglich.

Bevorzugt enthält die erfindungsgemäße Zubereitung als Hauptbestandteile folgende Stoffe (alle anorganischen Bestandteile berechnet als Oxid; Angaben in Gew.-% bezogen auf die Gesamtmasse der Zubereitung):

| | |
|---|---|
| TiO₂ | 25 bis 60 |
| SiO₂: | 5 bis 25 |
| Fe₂O₃: | 2 bis 12 |
| MgO: | 0,1 bis 4 |
| CaO: | 0,4 bis 12 |
| H2O: | 15 bis 45 |
| Organisches Polymer: (in Form eines Superabsorbers) | 0,5 bis 1,0 |
| (bzw. organischer Kohlenstoff | 0,2 bis 0,5) |

Der Anteil an TiO₂-Rückstand aus der Titandioxidherstellung im Feststoffanteil der Zubereitung kann 1 bis 99,9 Gew.-%, vorzugsweise 50 bis 99,5 Gew.-%, insbesondere 90 bis 99,5 Gew.-%, betragen.

Der Feuchtegehalt der Zubereitung kann 10-50 Gew.-%, vorzugsweise 15-40 Gew.-%, insbesondere 20-30 Gew.-%, betragen.

Vorzugsweise weist die Zubereitung einen TiO₂-Gehal von 25 bis 60 Gew.-%, bevorzugt 30 bis 50 Gew.-%, einen SiO₂-Gehalt von 5 bis 25 Gew.-%, besonders bevorzugt 8 bis 20 Gew.-%, auf.

Der Sulfatgehalt der Zubereitung kann <3,0 Gew.-%, vorzugsweise <1,0 Gew.-%, insbesondere <0,5 Gew.-%, betragen.

Aus einer erfindungsgemäß hergestellten oder erhaltenen Zubereitung lassen sich problemlos Formkörper herstellen. Hierzu eignen sich die bekannten Formgebungsverfahren wie das Agglomerieren, das Pelletieren, das Granulierten, das Extrudieren aber auch das Verpressen, Sintern, Brikettieren oder Verkoken.

Zusammenfassend zeigt die Erfindung die Vorteile, dass feuchte Materialien durch einfachen Zusatz eines Additivs in Form von Feuchtigkeit absorbierenden organischen polymeren Materials, bevorzugt eines Superabsorber und/oder Hydrogels, in ein Granulat und damit in eine gut handhabbare Form überführt werden können, so dass eine Lagerung oder ein Transport als Schüttgut oder eine pneumatische Förderung wesentlich erleichtert wird. Außerdem ermöglicht die Granulatstruktur eine wesentlich erleichterte Verdunstung oder Verdampfung der Feuchtigkeit und damit eine effiziente Trocknung der Granulate, welche nach dem Stand der Technik nur mittels aufwändiger mechanischer Unterstützung und/oder unter Zuhilfenahme von thermischer Energie möglich war.

Die Erfindung wird anhand der folgenden Beispiele weiter erläutert:

### Beispiel 1:

482 g Aufschlussrückstand-Filterkuchen, der bei einem Aufschluss bei der TiO₂-Produktion nach dem Sulfatverfahren anfällt und einen Feststoffgehalt von 62 Gew.-% mit einem TiO₂-Anteil von 75 Gew.-% (bezogen auf den Feststoffgehalt) aufweist, wird zusammen mit 3,0 g eines Superabsorbers (Typ: Luquasorb 1161 der Firma BASF) in einem Küchenmischer Krups-3-Mix innerhalb von 15 min gemischt. Die erhaltene Zubereitung, weist eine granulatartige Struktur mit einer gelartigen Konsistenz auf, ohne jedoch zu kleben, und ist sehr gut lager- und förderbar.

Über 90 Gew.-% des erhaltenen Produkts weisen eine Partikelgröße zwischen 1 und 5 mm auf (ermittelt durch Auszählung von 200 Teilchen und Mittelwertbildung). Die Schüttdichte beträgt 0,95 g/cm³ und die Stampfdichte (1000 Hübe im Stampfvolumeter nach DIN 53194) beträgt 1,32 g/cm³. Aus einem gefüllten 500ml-Meßzylinder mit einem Durchmesser von 50mm fließt die granulierte Zubereitung nach Drehen um 180° praktisch vollständig aus (nur wenige verbleibende Krümel an Zylinderwand und -boden).

Wenn das erhaltene Produkt bei Raumtemperatur in dünner Schicht ausgelegt wird, verliert es nach 1 h ca. 8%, nach 2 h ca. 14% seines Gewichts und nach 8 h ca. 33% seines Gewichts und damit beinahe den gesamten Wasseranteil.

Das noch feuchte, wasserhaltige, mit dem wasserbindenden Material versehene Granulat, vorzugsweise in der Körnung 1-5 mm, kann auch als Material zur Deponieabdeckung oder zur Herstellung von Beschichtungen für Schweißelektroden Verwendung finden.

### Beispiel 2 (Vergleichsbeispiel):

Aufschlussrückstand-Filterkuchen, der bei einem Aufschluss bei der TiO₂-Produktion nach dem Sulfatverfahren anfällt und einen Feststoffgehalt von 68 Gew.-% mit einem TiO₂-Anteil von 75 Gew.-% (bezogen auf den Feststoffgehalt) aufweist, wird in einen 500ml-Meßzylinder mit einem Durchmesser von 50mm gefüllt. Beim Drehen um 180° bleibt ein großer Teil (> 90 Gew.-%) des Aufschlussrückstand-Filterkuchens im Zylinder haften.

Zur Bestimmung der Stampfdichte wird der Aufschlussrückstand-Filterkuchen in ca. 1 cm³ große Stücke zerkleinert. Die Stampfdichte (1000 Hübe im Stampfvolumeter nach DIN 53194) des Aufschlussrückstand-Filterkuchens beträgt 1,84 g/cm³.

### Beispiel 3: Granulierung von Eisenoxid

1 kg eines Eisenoxid-Gelbpigments (FeOOH x H₂O) in Form eines Filterkuchens mit 35% Feststoffgehalt wird zusammen mit 20 g eines Superabsorbers (Typ: Luquasorb 1161 der Firma BASF) in einem Pflugscharmischer 5 Minuten gemischt. Es wird ein sehr gut lager- und förderbares Granulat erhalten mit einem Durchmesser im Bereich von 0,5 bis 2 mm.

### Beispiel 4: Granulierung und Trocknung von TiO₂-Pigment

500 g eines nachbehandelten Titandioxidpigments in Form eines Filterkuchens mit 70% Feststoffgehalt wird zusammen mit 10 g eines Superabsorbers (Typ: Luquasorb 1161 der Firma BASF) mit einem Küchenmischer Krups-3-Mix 10 Minuten geknetet. Es wird ein sehr gut lager- und förderbares Granulat erhalten mit einem Durchmesser im Bereich von 0,5 bis 3 mm.

### Beispiel 5: Granulierung von feinteiligem, neutralisiertem Titanhydrat

566,8 g Titanhydrat (Metatitansäure), welches bei der TiO₂-Produktion nach dem Sulfatverfahren anfällt und durch Hydrolyse schwefelsaurer Titanylsulfatlösung erhalten wurde, wird mit NaOH neutralisiert und gewaschene. Der erhaltene Filterkuchens mit 44,1% Feststoffgehalt (entsprechend 250 g an Trockenstoff) wird unter langsamer und kontinuierlicher Zugabe von 2,5 g eines Superabsorbers (Typ: Luquasorb 1161 der Firma BASF) mit einem Küchenmischer Krups-3-Mix bei kleinster Stellung 1 Stunde geknetet. Die erhaltene Zubereitung (Feststoffgehalt 46,2%) weist eine Granulatstruktur mit einem Durchmesser im Bereich von 1 bis 3 mm auf und ist sehr gut lager- und förderbar. Nach einer Trocknung über 72 Stunden im Umlufttrockenschrank bei ∼34°C weisen die Granulate ca. 13% Restfeuchte auf.

## Patentansprüche

1. Verfahren zur Granulierung von teilchenhaltigem Material aus industriellen Prozessen, bei dem das teilchenhaltige Material in Gegenwart von Wasser mit einem Material, das ein Wasser absorbierendes, wasserunlösliches und quellfähiges organisches Polymermaterial enthält oder daraus besteht, vermischt wird.

2. Verfahren zur Granulierung von teilchenhaltigem Material nach Anspruch 1 , bei dem das Wasser in Form von dem teilchenhaltigen Material anhaftender Feuchtigkeit und/oder als dem teilchenhaltigen Material und/oder der Mischung aus dem teilchenhaltigen Material mit dem Material, das das organische Polymermaterial enthält oder daraus besteht, zugegebenes Wasser eingesetzt wird.

3. Verfahren zur Granulierung von teilchenhaltigem Material nach Anspruch 1 oder 2, bei dem das teilchenhaltige Material einen Feuchtegehalt von mehr als 5 Gew.-%, bevorzugt 10 bis 90 Gew.-%, besonders bevorzugt 20-85 Gew.-%, bezogen auf das Gewicht des teilchenhaltigen Materials, aufweist.

4. Verfahren nach Anspruch 1, 2 oder 3, bei dem das teilchenhaltige Material eine Suspension, Schlamm, Paste, Filterkuchen oder kristallwasserhaltiges Salz ist oder solche Materialien enthält.

5. Verfahren nach Anspruch 1 oder 2, bei dem das teilchenhaltige Material als trockenes Pulver, Staub oder Mischungen davon eingesetzt wird.

6. Verfahren nach einem der vorhergehenden Ansprüche, bei dem das Wasser absorbierende, wasserunlösliche und quellfähige organische Polymermaterial ein Superabsorber und/oder Hydrogel ist und bevorzugt ein Polymerisat der Acrylsäure, bevorzugt ein wasserunlösliches Copolymer aus Natriumacrylat und Acrylamid, ist oder dieses enthält.

7. Verfahren nach einem der vorhergehenden Ansprüche, bei dem die Zugabemenge an Wasser absorbierendem, wasserunlöslichen und quellfähigen organischen Polymermaterial 0,01 bis 10 Gew.-%, bevorzugt 0,1 bis 5 Gew.-%, besonders bevorzugt 0,8 bis 3,5 Gew.%, bezogen auf die Masse des feuchten teilchenhaltigen Materials beträgt.

8. Verfahren nach einem der vorhergehenden Ansprüche, bei dem die erhaltenen Agglomerate einem Trocknungsschritt, bevorzugt in einem Trocknungsaggregat, unterzogen werden.

9. Verfahren nach Anspruch 8, bei dem der Feuchtegehalt der erhaltenen Agglomerate durch Kontakt mit einem gasförmigen Medium, bevorzugt mittels Wirbelschicht- oder Fließbetttrocknung, verringert wird.

10. Verfahren nach einem der vorhergehenden Ansprüche, bei dem das erhaltene Granulat einer Calcinierung unterzogen wird.

11. Granulat mit einem Gehalt an
- teilchenhaltigem Material aus industriellen Prozessen
- Wasser absorbierendem, wasserunlöslichem und quellfähigem organischen Polymermaterial, bevorzugt Polymerisate der Acrylsäure, besonders bevorzugt Copolymere aus Natriumacrylat und Acrylamid, und
- mit einem Wassergehalt von mehr als 5 Gew.-%, bevorzugt 10 bis 90 Gew.-%, besonders bevorzugt 20-85 Gew.-%, bezogen auf das Gesamtgewicht des Granulates.

12. Granulat nach Anspruch 11 mit einem Massenverhältnis von Wasser zu dem Wasser absorbierenden, wasserunlöslichen und quellfähigen organischen Polymermaterial von 5 bis 1000, vorzugsweise 10 bis 200, insbesondere 25 bis 100.

13. Granulat nach Anspruch 11 oder 12, mit einem mittleren Teilchendurchmesser von 0,1 bis 20 mm, bevorzugt 0,5 bis 10 mm, besonders bevorzugt 1 bis 5 mm.

14. Granulat nach einem der Ansprüche 11 bis 13, mit einem Masseanteil, der eine Teilchengröße zwischen 1 und 5 mm aufweist, von mindestens 50 Gew.-%, vorzugsweise mindestens 70 Gew.-%, insbesondere mindestens 80 Gew.-%, bezogen auf das Gesamtgewicht des Granulates.

15. Granulat nach einem der Ansprüche 11 bis 14, wobei das teilchenhaltige Material anorganische oder organische Pigmente, bevorzugt Titandioxidpigmente, Eisenoxidpigmente, Chromoxidpigmente oder Pigmentruße, Rückstände aus der Titandioxidproduktion, insbesondere aus dem Sulfatverfahren oder Chloridverfahren, Eisensulfat-Heptahydrat, Grünsalz, Betonschleifschlamm, Schleifrückstände, Schleifschlämme, Lackschlämme, Füllstoffe, Kaolin, CaCO₃, BaS0₄, ZnS, Lithopone, Gips, Phosphatierschlamm, Löserückstände, Gangart, Schlämme aus Neutralisation, Gießereischlämme, Rückstände aus der galvanischen Industrie sowie aus Eindickern, Metallschlämme, Metallhydroxidschlämme oder metallhydroxidhaltige Schlämme, Bohrschlämme, keramische Zwischenprodukte wie z.B. Zirkonhydroxid, Aluminiumhydroxid, Aluminiumtitanat, Zirkontitanhydrat, Schlämme aus Erdgasförderung und - reinigung oder Mischungen davon enthält oder daraus besteht.

16. Granulat nach einem der Ansprüche 11 bis 14, wobei das teilchenhaltige Material Rückstände aus der Titandioxidherstellung nach dem Sulfatverfahren oder nach dem Chloridverfahren, vorzugsweise aus dem Chlorierreaktor, anfallenden Rückstand, der bevorzugt einem Aufbereitungsschritt unterzogen wird, oder Mischungen davon enthält oder daraus besteht, bei dem der Anteil an Rückstand aus der Titandioxidherstellung im Feststoff anteil des Granulates bevorzugt 1 bis 99,9 Gew.-%, vorzugsweise 50 bis 99,5 Gew.-%, insbesondere 90 bis 99,5 Gew.-% beträgt.

## Claims

1. Method for granulating particle-containing material obtained from industrial processes, wherein said particle-containing material is mixed in the presence of water with a material containing or consisting of a moisture-absorbing water-insoluble organic polymer material which is capable of swelling.

2. Method for granulating particle-containing material according to claim 1 in which the water is used in the form of moisture adhering to the particle-containing material and/or as water added to the particle-containing material and/or the mixture of the particle-containing material with the material that contains or consists of the organic polymer material.

3. Method for granulating particle-containing material according to claim 1 or 2 in which the particle-containing material has a moisture content of more than 5 % w/w, preferably 10 to 90 % w/w, particularly preferably 20-85 % w/w, relative to the weight of the particle-containing material.

4. Method in accordance with claims 1, 2 or 3 in which the particle-containing material is a suspension, slurry, paste, filter cake or hydrous salt or contains such materials.

5. Method in accordance with claim 1 or 2 in which the particle-containing material is used as a dry powder, dust or mixtures therefrom.

6. Method in accordance with one of the preceding claims in which the water-insoluble and swellable organic polymer material absorbing the water is a super-absorber and/or hydrogel and preferably is or contains a polymerisate of acrylic acid, preferably a water-insoluble co-polymer of sodium acrylate and acrylamide.

7. Method in accordance with one of the preceding claims in which the volume to be added of water-absorbing, water-insoluble and swellable organic polymer material is 0.01 to 10 % w/w, preferably 0.1 to 5 % w/w, particularly preferably 0.8 to 3.5 % w/w, related to the mass of the wet particle-containing material.

8. Method in accordance with one of the preceding claims in which the agglomerates obtained are subjected to a drying step, preferably in a drying unit.

9. Method in accordance with claim 8 in which the moisture content of the agglomerates obtained is reduced by contact with a gaseous medium, preferably by means of fluidised or flow bed drying.

10. Method in accordance with one of the preceding claims in which the granulate obtained is subjected to calcining.

11. Granulate with a content of
- particle-containing material obtained from industrial processes
- water-absorbing, water-insoluble and swellable organic polymer material, preferably polymerisates of acrylic acid, particularly preferably co-polymers of sodium acrylate and acrylamide, and
- having a water content of more than 5 % w/w, preferably 10 to 90 % w/w, particularly preferably 20-85 % w/w, relative to the total weight of the granulate.

12. Granulate in accordance with claim 11 having a mass ratio of water to the water-absorbing, water-insoluble and swellable organic polymer material of 5 to 1000, preferably 10 to 200, particularly 25 to 100.

13. Granulate in accordance with claim 11 or 12 having an average particle diameter of 0.1 to 20 mm, preferably 0.5 to 10 mm, particularly preferably 1 to 5 mm.

14. Granulate in accordance with one of the claims 11 to 13 comprising a mass fraction having a particle size between 1 and 5 mm of at least 50 % w/w, preferably at least 70 % w/w, particularly at least 80 % w/w relative to the total weight of the granulate.

15. Granulate in accordance with one of the claims 11 to 14, wherein the particle-containing material contains or consists of inorganic or organic pigments, preferably titanium dioxide pigments, iron oxide pigments, chromium oxide pigments or carbon black, residues from titanium dioxide production, particularly from the sulphate method or the chloride method, iron sulphate heptahydrate, copperas, concrete grinding slurry, grinding residues, grinding slurries, paint slurries, fillers, kaolin, CaCO₃, BaSO₄, ZnS, lithopone, gypsum, phosphating slurry, solvent residues, gangue, neutralisation slurries, foundry slurries, residues from the galvanising industry and from thickeners, metal slurries, metal hydroxide slurries or slurries containing metal hydroxide, drilling slurries, ceramic middlings such as zirconium hydroxide, aluminium hydroxide, aluminium titanate, zirconium titanium hydrate, slurries produced in natural gas production and purification or mixtures thereof.

16. Granulate in accordance with one of the claims 11 to 14, wherein the particle-containing material contains or consists of residues from titanium dioxide production according to the sulphate method or according to the chloride method, preferably residue arising from the chlorinating reactor, which has preferably been submitted to a treatment stage, or mixtures thereof, in which the content of residue from the titanium dioxide production in the solid fraction of the granulate is preferably 1 to 99.9 % w/w, preferably 50 to 99.5 % w/w, particularly 90 to 99.5 % w/w.

## Revendications

1. Procédé de granulation d'un matériau particulaire provenant de processus industriels, dans lequel le matériau particulaire est, en présence d'eau, mélangé à un matériau qui contient un matériau polymère organique absorbant l'eau, insoluble dans l'eau et pouvant gonfler, ou en est constitué.

2. Procédé de granulation d'un matériau particulaire selon la revendication 1, dans lequel l'eau est utilisée sous forme de l'humidité qui adhère au matériau particulaire, et/ou en tant qu'eau ajoutée au matériau particulaire et/ou au mélange du matériau particulaire et du matériau qui contient le matériau polymère organique ou en est constitué.

3. Procédé de granulation d'un matériau particulaire selon la revendication 1 ou 2, dans lequel le matériau particulaire présente une teneur en humidité supérieure à 5 % en poids, de préférence de 10 à 90 % en poids, d'une manière particulièrement préférée de 20 à 85 % en poids, par rapport au poids du matériau particulaire.

4. Procédé selon la revendication 1, 2 ou 3, dans lequel le matériau particulaire est une suspension, une bouillie, une pâte, un gâteau de filtration ou un sel contenant de l'eau de cristallisation, ou contient des matériaux de ce type.

5. Procédé selon la revendication 1 ou 2, dans lequel le matériau particulaire est utilisé sous forme de poudre sèche, de poussières, ou de mélanges de celles-ci.

6. Procédé selon l'une des revendications précédentes, dans lequel le matériau polymère organique absorbant l'eau, insoluble dans l'eau et pouvant gonfler, est un superabsorbant et/ou un hydrogel, et de préférence un polymère de l'acide acrylique, de préférence un copolymère insoluble dans l'eau d'acrylate de sodium et d'acrylamide, ou le contient.

7. Procédé selon l'une des revendications précédentes, dans lequel la quantité ajoutée du matériau polymère organique absorbant l'eau, insoluble dans l'eau et pouvant gonfler, est de 0,01 à 10 % en poids, de préférence de 0,1 à 5 % en poids, d'une manière particulièrement préférée de 0,8 à 3,5 % en poids, par rapport à la masse du matériau particulaire humide.

8. Procédé selon l'une des revendications précédentes, dans lequel les agglomérats obtenus sont soumis à une étape de séchage, de préférence dans un équipement de séchage.

9. Procédé selon la revendication 8, dans lequel la teneur en humidité des agglomérats obtenus est diminuée par contact avec un fluide gazeux, de préférence par séchage tourbillonnaire ou à lit fluidisé.

10. Procédé selon l'une des revendications précédentes, dans lequel le granulat obtenu est soumis à une calcination.

11. Granulat contenant
- un matériau particulaire provenant de processus industriels
- matériau polymère organique absorbant l'eau, insoluble dans l'eau et pouvant gonfler, de préférence des polymères de l'acide acrylique, d'une manière particulièrement préférée des copolymères d'acrylate de sodium et d'acrylamide, et
- ayant une teneur en eau supérieure à 5 % en poids, de préférence 10 à 90 % en poids, d'une manière particulièrement préférée de 20 à 85 % en poids, par rapport au poids total du granulat.

12. Granulat selon la revendication 11, présentant un rapport en masse de l'eau au matériau polymère organique absorbant l'eau, insoluble dans l'eau et pouvant gonfler, de 5 à 1000, de préférence de 10 à 200, en particulier de 25 à 100.

13. Granulat selon la revendication 11 ou 12, ayant une granulométrie moyenne de 0,1 à 20 mm, de préférence de 0,5 à 10 mm, d'une manière particulièrement préférée de 1 à 5 mm.

14. Granulat selon l'une des revendications 11 à 13, présentant un rapport en masse correspondant à une granulométrie comprise entre 1 et 5 mm, d'au moins 50 % en poids, de préférence d'au moins 70 % en poids, en particulier d'au moins 80 % en poids, par rapport au poids total du granulat.

15. Granulat selon l'une des revendications 11 à 14, le matériau particulaire contenant des pigments inorganiques ou organiques, de préférence des pigments de dioxyde de titane, des pigments d'oxyde de fer, des pigments d'oxyde de chrome ou des noirs de carbone pigmentaires, des résidus de la production du dioxyde de titane, en particulier du procédé au sulfate ou du procédé au chlorure, du sulfate de fer heptahydraté, du sel vert, des poussières de meulage du béton, des résidus de meulage, des boues de meulage, des boues de vernis, des charges, du kaolin, du CaCO₃, du BaSO₄, du ZnS, du lithopone, du plâtre, de la boue de phosphatation, des résidus de dissolution, de la gangue, des boues de neutralisation, des boues de fonderie, des résidus de l'industrie galvanique, ainsi que d'épaississants, des boues métalliques, des boues d'hydroxydes métalliques ou de boues contenant des hydroxydes métalliques, des boues de forage, des produits intermédiaires céramiques tels que l'hydroxyde de zirconium, l'hydroxyde d'aluminium, le titanate d'aluminium, l'hydrate de zirconium et de titane, les boues de la récupération et de la purification du gaz naturel, ou des mélanges de ceux-ci, ou en est constitué.

16. Granulat selon l'une des revendications 11 à 14, dans lequel le matériau particulaire contient des résidus de la fabrication du dioxyde de titane par le procédé au sulfate ou par le procédé au chlorure, de préférence un résidu obtenu dans un réacteur de chloration, qui de préférence est soumis à une étape de préparation, ou des mélanges de ceux-ci, ou en est constitué, la proportion de résidus de la fabrication du dioxyde de titane, par rapport à l'extrait sec du granulat, étant de préférence de 1 à 99,9 % en poids, de préférence de 50 à 99,5 % en poids, en particulier de 90 à 99,5 % en poids.
